# EUROPÄISCHE PATENTANMELDUNG

(11) **EP 1 770 029 A2**
(43) Veröffentlichungstag der Anmeldung: **04.04.2007**
(21) Anmeldenummer: 06011329.7
(22) Anmeldetag: 01.06.2006
(51) Int. Cl.: B65G 21/20, B65G 59/06, B65G 47/14

(54) **Vorrichtung zum Übergeben von länglichen Produkten**

(30) Priorität: 01.10.2005 DE 102005047268
(71) Anmelder: UHLMANN PAC-SYSTEME GmbH & Co. KG, 88471 Laupheim (DE)
(72) Erfinder: Amann, Sandra, 88471 Laupheim (DE); Regener, Markus, 88456 Muttensweiler (DE)
(74) Vertreter: Hentrich, Swen

(57) **Zusammenfassung**

Die Erfindung betrifft eine Vorrichtung zum Übergeben von länglichen Produkten, von einer ersten die Produkte in einer horizontalen Orientierung bereitstellenden Fördereinrichtung (2) an eine zweite Fördereinrichtung (3), ein endlos umlaufendes Förderband (4) vorgesehen ist, gebildet aus Bandgliedern, die eine Aufnahme für die Produkte aufweisen, in deren Aufnahmeflächen Öffnungen münden, die mit einer zwischen dem oberen Trumm und dem unteren Trumm des Förderbandes (4) angeordneten Saugleiste (10) verbunden sind.

## Beschreibung

Die Erfindung betrifft eine Vorrichtung zum Übergeben von länglichen Produkten, wie Spritzen, Ampullen oder dergl., von einer ersten die Produkte in einer horizontalen Orientierung bereitstellenden Fördereinrichtung an eine zweite Fördereinrichtung.

Eine derartige Vorrichtung ist in der nicht vorveröffentlichten deutschen Patentanmeldung DE 10 2004 017 228.5 beschrieben, die durch ein Pick-&-Place-System gebildet ist, um die Produkte aus den Rastplätzen eines umlaufenden Bandes entnehmen und gezielt in eine geformte Folie umsetzen zu können. Dieses Pick-&-Place-System ist konstruktiv relativ aufwendig und damit teuer in der Herstellung und erfordert darüber hinaus das Ergreifen jedes einzelnen Produktes mit dessen nachfolgendem Transfer und der Übergabe in die geformte Folie, so dass auch die Leistungsfähigkeit limitiert ist.

Der Erfindung liegt die Aufgabe zugrunde, eine Vorrichtung der eingangs genannten Art so auszubilden, dass bei verringertem apparativem Aufwand eine zuverlässige Arbeitsweise erzielt wird.

Diese Aufgabe wird nach der Erfindung bei einer Vorrichtung der eingangs genannten Art dadurch gelöst, dass ein endlos umlaufendes Förderband vorgesehen ist, gebildet aus Bandgliedern, die eine Aufnahme für die Produkte aufweisen, in deren Aufnahmeflächen Öffnungen münden, die mit einer zwischen dem oberen Trumm und dem unteren Trumm des Förderbandes angeordneten, zumindest mit dem unteren Trumm zusammenwirkende Saugleiste verbunden sind.

Diese Vorrichtung zeichnet sich dadurch aus, dass das die von der ersten Fördereinrichtung herangeförderten Produkte aufnehmende Förderband zugleich auch für die Abgabe der Produkte an die zweite Fördereinrichtung zuständig ist und dadurch der Einsatz eines Pick-&-Place-Systemes vollständig vermieden werden kann, wobei diese Vermeidung auf eine konstruktiv sehr einfache Weise erreicht wird durch Verwenden der Vakuumtechnik für das Koppelglied zwischen der ersten Fördereinrichtung und der zweiten Fördereinrichtung.

Dabei ist im Rahmen der Erfindung vorgesehen, dass die Aufnahmen im Querschnitt prismenartig gestaltet sind, um so auf einfache Weise die korrekte Positionierung der Produkte in den Aufnahmen der Bandglieder zu erzielen.

Dabei bietet es sich dann an, dass die Öffnungen am Boden der Aufnahmen angeordnet sind, also durch den von der Saugleiste bereit gestellten Unterdruck die Produkte zum Boden der Aufnahmen bewegt und dort saugend gehalten werden.

Aus Gründen der Einfachheit ist die Anordnung so gewählt, dass die erste Fördereinrichtung oberhalb des oberen Trumms des Förderbandes angeordnet ist und die zweite Fördereinrichtung unterhalb des unteren Trumms, so dass die Produkte von der ersten Fördereinrichtung unter Ausnutzung der Schwerkraft an die Aufnahmen der Bandglieder übergeben und in diesen Aufnahmen ggfs. durch die auch auf die Öffnungen des oberen Trumms wirkende Saugleiste durch den über die Öffnungen vermittelten Unterdruck richtig positioniert werden, während die Übergabe der Produkte aus dem unteren Trumm in die zweite Fördereinrichtung in einfacher Weise dadurch geschieht, dass die Verbindung zur Unterdruckquelle beendet wird.

Als zweckmäßig hat es sich erwiesen, dass die erste Fördereinrichtung senkrecht und die zweite Fördereinrichtung parallel zu dem Förderband orientiert und das untere Trumm des Förderbandes zur parallelen und gleichgerichteten Bewegung mit der zweiten Fördereinrichtung vorgesehen ist. Durch diese Anordnung ist im wesentlichen eine gute Zugänglichkeit zu dem Förderband gewährleistet, das die Produkte von der ersten Fördereinrichtung zunächst zu dieser seitlich transportiert und so eine Kontrolle der Produkte ermöglicht, während die Orientierung des unteren Trumms relativ zu der zweiten Fördereinrichtung die ordnungsgemäße Übergabe erleichtert, inbesondere wenn die zweite Fördereinrichtung eine Formfolie mit Näpfen transportiert, in die gezielt die Produkte abgelegt werden sollen, so dass eine Synchronisierung zwischen dem Förderband und der zweiten Fördereinrichtung erforderlich ist.

Im folgenden wird die Erfindung an einem in der Zeichnung dargestellten Ausführungsbeispiel näher erläutert; es zeigen:

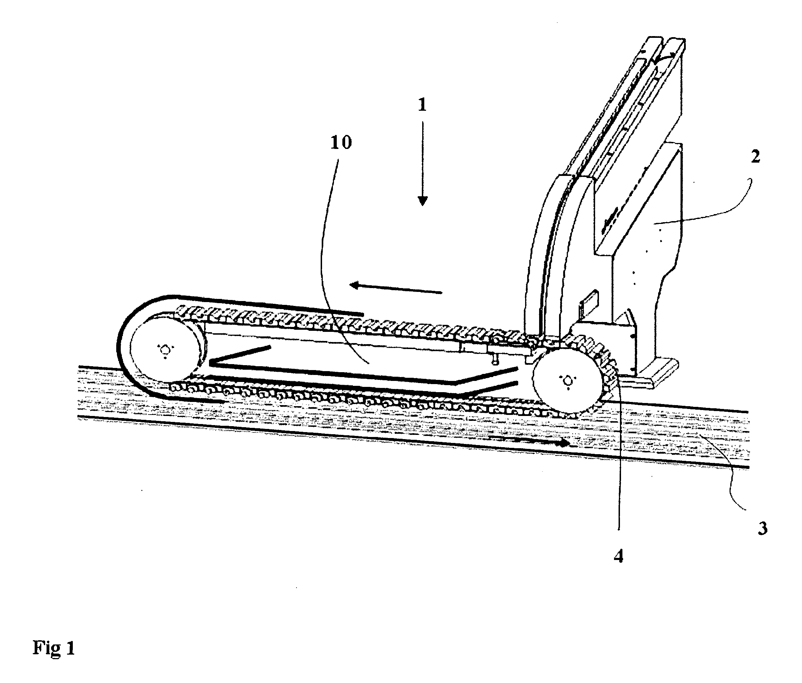

- Fig. 1: eine schematische perspektivische Darstellung der als Kopplungsglied zwischen der ersten Fördereinrichtung und der zweiten Fördereinrichtung fungierenden erfindungsgemäßen Vorrichtung, und

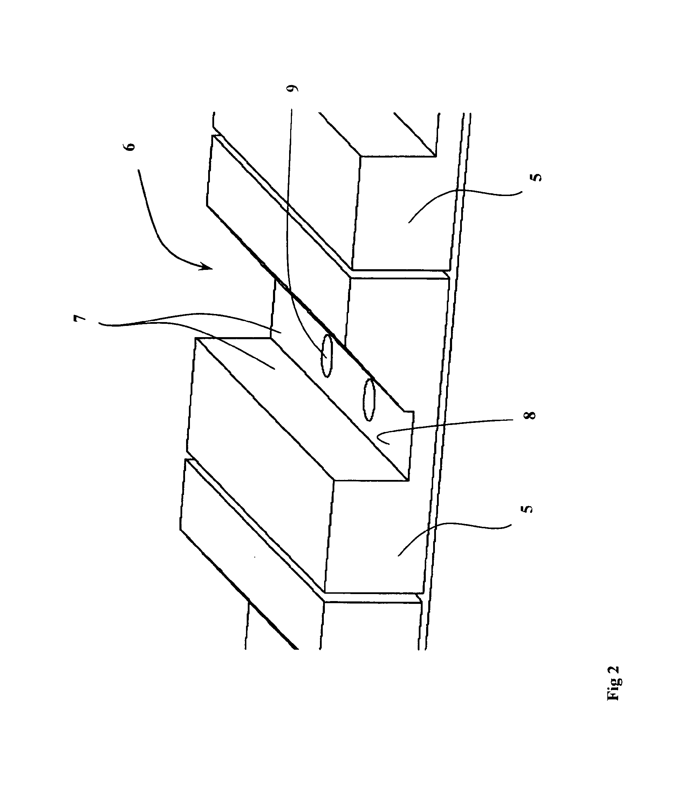

- Fig. 2: eine Detaildarstellung der prismenartigen Aufnahme in dem Bandglied des Förderbandes.

In der Zeichnung ist eine Vorrichtung 1 gezeigt, die dazu dient, längliche Produkte, wie beispielsweise Spritzen, von einer ersten Fördereinrichtung 2 an eine zweite Fördereinrichtung 3 zu übergeben, wobei die Spritzen von der ersten Fördereinrichtung 2 in einer horizontalen Orientierung bereitgestellt werden. Die Vorrichtung 1 umfasst ein endlos umlaufendes Förderband 4, dass aus einzelnen Bandgliedern 5 gebildet ist, die jeweils eine Aufnahme 6 für die Produkte aufweisen, in deren Aufnahmeflächen 7, in dem gezeigten Ausführungsbeispiel nämlich in dem Boden 8 der Aufnahme 6, Öffnungen 9 münden, die mit einer zwischen dem oberen Trumm und dem unteren Trumm des Förderbandes 4 angeordneten Saugleiste 10 verbunden sind. Die Aufnahmen 6 sind im Querschnitt prismenartig gestaltet und bewirken so eine korrekte Positionierung der Spritzen, die von der ersten Fördereinrichtung 2, beispielsweise der in der DE 10 2004 017 228 beschriebenen Art, an das Förderband 4 übergeben werden. Die erste Fördereinrichtung 2 ist oberhalb des oberen Trumms des Förderbandes 4 angeordnet in einer senkrechten Ausrichtung, während die zweite Fördereinrichtung 3 unterhalb des unteren Trumms parallel zu dem Förderband 4 orientiert ist.

## Patentansprüche

1. Vorrichtung zum Übergeben von länglichen Produkten, wie Spritzen, Ampullen oder dergl., von einer ersten die Produkte in einer horizontalen Orientierung bereitstellenden Fördereinrichtung (2) an eine zweite Fördereinrichtung (3), **dadurch gekennzeichnet, daß** ein endlos umlaufendes Förderband (4) vorgesehen ist, gebildet aus Bandgliedern (5), die eine Aufnahme (6) für die Produkte aufweisen, in deren
Aufnahmeflächen (7) Öffnungen (9) münden, die mit einer zwischen dem oberen Trumm und dem unteren Trumm des Förderbandes (4) angeordneten, zumindest mit dem unteren Trumm zusammenwirkenden Saugleiste (10) verbunden sind.

2. Vorrichtung nach Anspruch 1, **dadurch gekennzeichnet, daß** die Aufnahmen (6) im Querschnitt prismenartig gestaltet sind.

3. Vorrichtung nach Anspruch 1 oder 2, **dadurch gekennzeichnet, daß** die Öffnungen (9) im Boden (8) der Aufnahmen angeordnet sind.

4. Vorrichtung nach einem der Ansprüche 1 bis 3, **dadurch gekennzeichnet, daß** die erste Fördereinrichtung (2) oberhalb des oberen Trumms des Förderbandes (4) angeordnet ist und die zweite Fördereinrichtung (3) unterhalb des unteren Trumms.

5. Vorrichtung nach Anspruch 4, **dadurch gekennzeichnet, daß** die erste Fördereinrichtung (2) senkrecht und die zweite Fördereinrichtung (3) parallel zu dem Förderband (4) orientiert und das untere Trumm des Förderbandes (4) zur parallelen und gleichgerichteten Bewegung mit der zweiten Fördereinrichtung (3) vorgesehen ist.
